(19) Europäisches Patentamt
European Patent Office
Office européen des brevets

(11) Publication number: **0 288 076 B1**

(12) # EUROPEAN PATENT SPECIFICATION

(45) Date of publication of patent specification: **04.09.91**

(51) Int. Cl.[5]: **C09B 23/08**, G03C 1/825

(21) Application number: **88106493.5**

(22) Date of filing: **22.04.88**

(54) **Infrared filter dyes for photographic elements.**

(30) Priority: **24.04.87 US 41955**

(43) Date of publication of application:
**26.10.88 Bulletin 88/43**

(45) Publication of the grant of the patent:
**04.09.91 Bulletin 91/36**

(84) Designated Contracting States:
**BE DE FR GB NL**

(56) References cited:
**EP-A- 0 287 100**
**EP-A- 0 288 083**
**DE-A- 3 134 362**
**GB-A- 2 089 055**
**JP-A-62 123 454**

(73) Proprietor: **EASTMAN KODAK COMPANY (a New Jersey corporation)**
**343 State Street**
**Rochester New York 14650(US)**

(72) Inventor: **Parton, Richard L. c/o Eastman Kodak Company**
**Patent Department 343 State Street**
**Rochester New York 14650(US)**
Inventor: **Gingello, Anthony D. c/o Eastman Kodak Company**
**Patent Department 343 State Street**
**Rochester New York 14650(US)**
Inventor: **Collett, David J. c/o Eastman Kodak Company**
**Patent Department 343 State Street**
**Rochester New York 14650(US)**
Inventor: **Stegman, David Alan c/o Eastman Kodak Company**
**Patent Department 343 State Street**
**Rochester New York 14650(US)**

(74) Representative: **Brandes, Jürgen, Dr.Rer.Nat. et al**
**Wuesthoff & Wuesthoff, Patent- und Rechtsanwälte, Schweigerstrasse 2**
**W-8000 München 90(DE)**

EP 0 288 076 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to infrared absorbing dyes and photographic elements comprising a layer containing such dyes.

Photographic elements having layers comprising filter dyes are known. These filter dyes may be used for a variety of purposes, such as absorber dyes in photographic emulsion layers to improve the image sharpness of that layer, general purpose filter dyes for absorbing light of a particular wavelength so it does not expose or exposes at a reduced intensity a lower layer in the element, or as antihalation dyes to reduce halation in the image-forming layers.

Filter dyes may be present in essentially any layer of a photographic element where it is desired to absorb radiation in the region of the spectrum where the dye absorbs light, such as an interlayer, a radiation sensitive layer, an overcoat layer, an undercoat layer, a backing layer, or others known in the art. Absorber dyes (also called intergrain absorber dyes) are generally present in the radiation sensitive layers of photographic elements. Antihalation layers may be located on either side of a transparent support carrying radiation sensitive layers, particularly silver halide emulsion layers. Moreover, such antihalation layers may be coated between two or more silver halide emulsions layers in a multilayer element or as a backing layer on the side of the support away from the light sensitive layers.

The development of information recording equipment using semiconductor laser diodes emitting in the infrared spectral region has required a parallel development of photographic elements, particularly silver halide photographic elements, with appropriate spectral sensitivity. Such elements often require the presence of filter dyes that absorb infrared radiation in one or more layers of the element, for example, as antihalation dyes or absorber dyes.

Such filter dyes should:

(1) filter light in the region from 730 nm to 900 nm, depending on the emission wavelength of the laser diode (a common laser emission wavelength is in the range of 800 nm amd other typical laser emission wavelengths are in the ranges of 750, 780, 820, and 870 nm),

(2) be water soluble at levels of at least 5 mg/ml so as to allow aqueous dissolution of the dye and provide compatibility with hydrophilic layers, and

(3) leave little or no stain in the processed film. U.S. Patent 4,362,800 discloses 1,1,1'1'-tetramethyl-3,3'-bis(sulfoalkyl)-1H-benz[e]indolotricarbocyanine sodium salt. This dye has been used with some success as a photographic filter dye, but it tends to leave a greenish stain after processing. Such a stain is objectionable. GB 2 089 055 A discloses 1,1,1',1'-tetramethyl-3,3'-bis(carboxymethyl)-1H-indolotricarbocyanine as compound n. 76 for use as a filter dye in an electrophotographic film. Post-processing stain is not a factor in an electrophotographic film, but if this dye were to be used in a photographic material subject to processing, it would leave objectionable stain. Other dyes, such as those disclosed in U.S. Application serial no. 881,312, entitled Novel Infrared Absorbing Dyes and Photographic Elements Containing Same, filed July 2, 1986, require the use of a deaggregant to obtain the proper absorption wavelength. Deaggregants, however, can cause adverse photographic effects, such as speed loss. Thus, a nonstaining infrared filter dye is needed.

The present invention provides infrared-absorbing filter dyes having the formula:

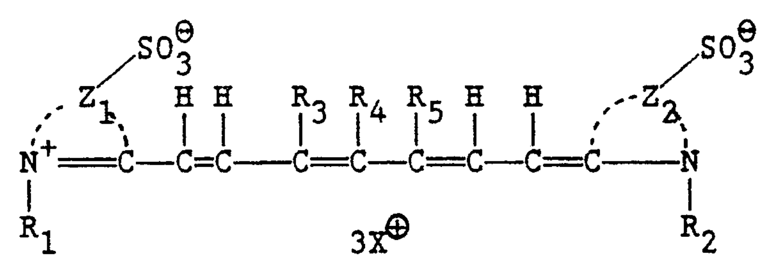

In this formula, $R_1$ and $R_2$ each independently represents substituted or unsubstituted: sulfoalkyl, carboxyalkyl, or sulfatoalkyl, from 2 to 4 carbon atoms, having 2 carbon atoms in the alkyl chain linking the nitrogen atom of each Z ring and the sulfo or sulfato group, and 1 carbon atom in the alkyl chain linking the

nitrogen atom of each Z ring and the carboxy group.

$R_3$ and $R_5$ are each hydrogen or together represent the atoms necessary to complete a substituted or unsubstituted 5- or 6-membered carbocyclic ring, and $R_4$ represents hydrogen, substituted or unsubstituted alkyl of 1 to 4 carbon atoms, substituted or unsubstituted aryl, halogen, cyano, or

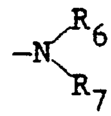 ,

where $R_6$ and $R_7$ each independently represents substituted or unsubstituted alkyl of from 1 to 6 carbon atoms or substituted or unsubstituted aryl or together represent the non metallic atoms necessary to form a substituted or unsubstituted 5- or 6-membered heterocyclic ring.

$X^{\oplus}$ represents a cation.

$Z_1$ and $Z_2$, each independently represent the atoms needed to complete a substituted or unsubstituted: indole, naphthindole or benzindole nucleus.

Such dyes can be used effectively as filter dyes in infrared-sensitive photographic elements without requiring a deaggregant and without leaving an objectionable post-processing stain.

With dyes according to formula (I), $R_1$ and $R_2$ each independently represent sulfoalkyl, carboxyalkyl, or sulfatoalkyl of from 2 to 4 carbon atoms, having 2 carbon atoms in the alkyl chain linking the nitrogen atom of each Z ring and the sulfo or sulfato group, and 1 carbon atom in the alkyl chain linking the nitrogen atom of each Z ring and the carboxy group. Additionally, substituted sulfoalkyl, carboxyalkyl, and sulfatoalkyl are useful as $R_1$ and $R_2$. Such groups may be substituted with substituents such as hydroxy and halogen such as Cl or F. Examples of $R_1$ and $R_2$ include sulfoethyl, carboxymethyl, and 2-sulfopropyl.

$R_3$ and $R_5$ each independently represent hydrogen or together represent the atoms necessary to complete a 5- or 6-membered carbocyclic ring, such as cyclopentenyl or cyclohexenyl. Substituted carbocyclic rings (substituted with, for example, alkyl such as methyl, ethyl, propyl, and butyl, halogen, or hydroxy) are also useful as $R_3$ and $R_5$ (e.g., 5-hydroxycyclohexenyl or 5,5'-dimethyl-cyclohexenyl).

$R_4$ represents hydrogen, alkyl of from 1 to 4 carbon atoms such as methyl, ethyl, or propyl,

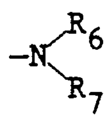 .

halogen such as F, Cl, etc., cyano, or Substituted alkyl (substituted with, for example, hydroxy, halogen such as Cl or F, or aryl such as phenyl) are also useful as $R_4$ (e.g., hydroxymethyl, phenoxymethyl, or phenylmethyl). $R_6$ and $R_7$ each individually represent alkyl of from 1 to 6 carbon atoms (e.g., methyl, ethyl, propyl), aryl (e.g., phenyl, p-methoxyphenyl), or together represent the non-metallic atoms necessary to complete a 5- or 6-membered heterocyclic ring. Examples of such heterocyclic ring groups include morpholino, thiomorpholino, and piperazino, such as 4-ethoxycarbonyl-1-piperazino and 4-methyl-1-piperazino. Additionally, substituted alkyl, aryl, or heterocyclic rings are useful as $R_6$ and $R_7$. Useful substituents include hydroxy, alkoxy, halogen, acetyl, carboxy, or sulfo, and useful substituted groups include hydroxyethyl, 4-chlorophenyl, 4-methoxyphenyl, 4-sulfophenyl, and 2-carboxyethyl.

It is contemplated herein that indole, naphthindole, or benzindole nuclei that are substituted with substituents such as halogen (e.g., Cl or F), sulfo, carboxy, hydroxy, alkyl (e.g., methyl), hydroxyalkyl such as hydroxymethyl, carboxyalkyl such as carboxymethyl, or aryl (e.g., phenyl or p-sulfophenyl) are also useful as $Z_1$ and $Z_2$ according to the present invention.

A preferred class of dye compounds according to formula (I) are represented by formula:

(II)

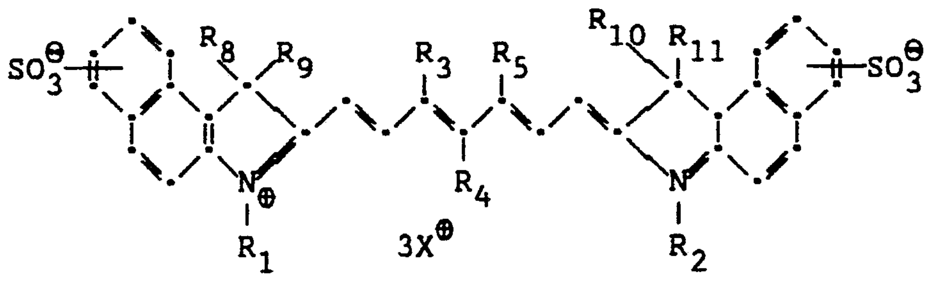

where X⊕, R1, R2, R3, R4, and R5, are as defined above,

$R_8$, $R_9$, $R_{10}$ and $R_{11}$ each independently represent methyl or ethyl, or $R_8$ and $R_9$ or $R_{10}$ and $R_{11}$, taken together with the carbon atoms to which they are attached, may form a cycloalkyl group. Also useful as $R_8$, $R_9$, $R_{10}$, and $R_{11}$ include groups substituted with substituents such as hydroxy, sulfato, and carboxy. Examples of useful substituted groups include hydroxymethyl, sulfatomethyl, and carboxyethyl.

The dyes of formula (I) can be made according to the procedures of U.S. Patents 2,895,955, 3,148,187, and 3,423,207. Such a preparation procedure is illustrated in Example 1 infra.

A deaggregant is not needed or even necessarily desirable for the dyes of formula (I). The dyes of formula (I) have an absorbance maximum in the desired wavelength range in molecular form and do not aggregate. These dyes avoid the necessity of using a deaggregant, which can cause adverse photographic effects such as speed loss during storage.

Examples of dyes useful in the invention include:

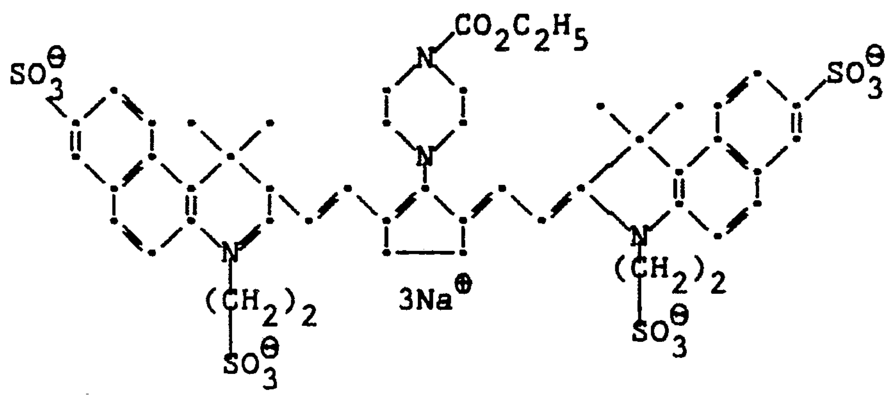

,

and

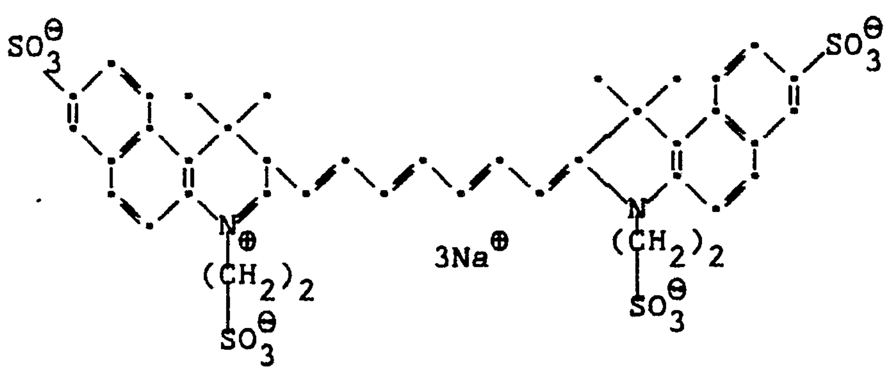

The dyes of formula (I) can be incorporated in a photographic element in any amount known to be effective as a filter dye in photographic elements. In a preferred embodiment, the dyes useful in the invention are in a hydrophilic colloid layer of a photographic element at a concentration of from $9.3 \times 10^{-4}$ to 4.7 g/m$^2$. The deaggregant is preferably present in an amount of from 25 to 10,000 weight percent, based

on the weight of the dye.

When used as an antihalation dye, the dye of formula (I) is preferably present in a layer at a level of from $9.3 \times 10^{-3}$ to 4.7 g/m$^2$ and more preferably from 0.047 to 0.93 g/m$^2$. Antihalation layers are prepared by coating on the photographic element or on its support, by methods well-known in the art, a water solution of the dye, the deaggregant, a hydrophilic colloid binder and a coating aid such as saponin.

When used as an absorber dye in a photo sensitive layer of a photographic element, the dye of formula (I) is preferably present at a level of from $9.3 \times 10^{-4}$ to 0.47 g/m$^2$ and more preferably from $2.8 \times 10^{-3}$ to 0.19 g/m$^2$. The dye causes little speed loss does not adversely affect storage stability. Such layers are prepared by coating on the photographic element or on its support, by methods well-known in the art, an emulsion of silver halide grains, a hydrophilic colloid binder, and the dye, as well as other addenda known to be included in photosensitive layers, such as sensitizing dyes (e.g., infrared sensitizing dyes), dye-forming image couplers, and the like.

For many purposes, it is desirable to add agents to harden the colloidal binder material so that the filter dye-containing layer remains intact in the photographic element during and following the processing operation. The pH of the coating solution is adjusted when necessary by the usual methods to a level that is compatible with the light-sensitive emulsion layer.

The proportions of dye, deaggregant, water-permeable hydrophilic colloid binder, hardener, silver halide (if present), sensitizing dye (if present), and coating aid used in making layers containing the filter dye of formula (I) may be varied over wide ranges and will depend upon the specific requirements of the photographic element being produced. The method used to determine the optimum composition is well known in the art and need not be described here.

The photographic elements may be coated on any suitable support material used in photography such as polyethylene terephthalate,cellulose nitrate, cellulose acetate, papers, etc.

Hydrophilic colloidal materials used as binders include gelatin, gelatin substitutes, collodion, gum arabic, cellulose ester derivatives such as alkyl esters of carboxylated cellulose, hydroxy ethyl cellulose, carboxy methyl hydroxy ethyl cellulose, synthetic resins, such as the amphoteric copolymers described by Clavier et al, in U.S. Patent 2,949,442, issued August 16, 1960, polyvinyl alcohol, and others well known in the art.

Examples of polymeric gelatin substitutes are copolymers of allylamine and methacrylic acid, copolymers of allylamine, acrylic acid and acryl-amide, hydrolyzed copolymers of allylamine, methacrylic acid and vinyl acetate, the copolymers of allylamine, acrylic acid and styrene, the copolymers of allylamine, methacrylic acid and acrylonitrile, etc.

The dye and the deaggregant are generally added to the water permeable colloidal binder in water or methanol solution. Usually a coating aid, such as saponin, is added to the dyed colloidal suspension before coating it as a layer on the photographic element.

The photographic elements utilizing the filter dyes of formula (I) have infrared light-sensitive emulsion layers. Such layers may contain silver chloride, silver bromide, silver chlorobromide, silver iodide, silver bromoiodide, silver chlorobromoiodide, etc., as the light-sensitive material. Indeed, any infrared absorbing light-sensitive silver halide emulsion layer may be used in these photographic elements. The silver halide emulsion are sensitized for infrared absorption by any of the sensitizers commonly used to produce the desired sensitometric characteristics.

Methods of making such elements, the means for sensitizing them to infrared radiation and the incorporation of filter dyes in silver halide emulsion layers or antihalation layers are well known and need not be described herein. Detailed teachings in this regard can be obtained from Research Disclosure, 1978, Item 17643 entitled "Photographic Silver Halide Emulsions, Preparations, Addenda, Processing and Systems."

The practice of the invention is further illustrated by the following examples. The structures of the dyes of the Examples are given in the Tables I, II, and III.

TABLE I

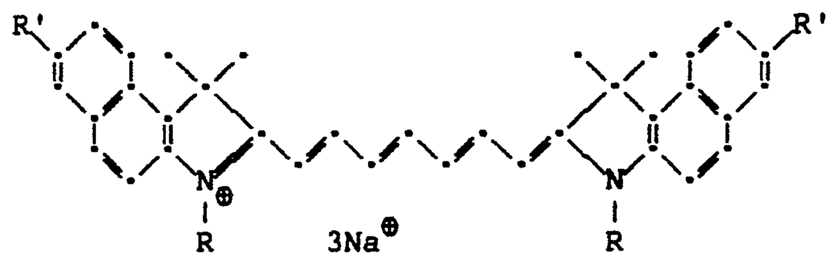

$3Na^{\oplus}$

| Dye No. | R | R' |
|---|---|---|
| 1 | $-(CH_2)_2SO_3^{\ominus}$ | $-SO_3^{\ominus}$ |
| 5 (Comparison) | $-(CH_2)_2CH(CH_3)SO_3^{\ominus}$ | $-SO_3^{\ominus}$ |
| 6 (Comparison) | $-(CH_2)_3SO_3^{\ominus}$ | H |
| 7 (Comparison) | $-(CH_2)_4SO_3^{\ominus}$ | H |
| 8 (Comparison) | $-(CH_2)_2CH(CH_3)SO_3^{\ominus}$ | H |

TABLE II

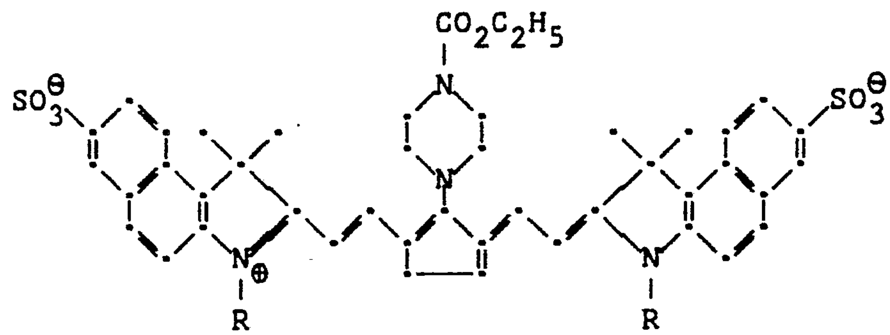

$3Na^{\oplus}$

| Dye No. | R |
|---|---|
| 2 | $-(CH_2)_2SO_3^{\ominus}$ |
| 9 (Comparison) | $-(CH)_2CH(CH_3)SO_3^{\ominus}$ |

TABLE III

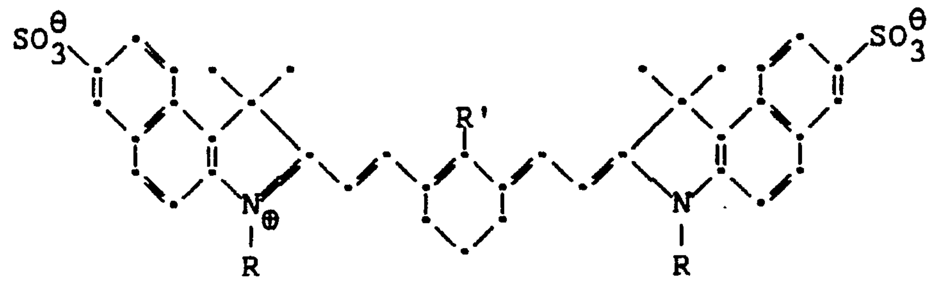

$3K^{\oplus}$

| Dye No. | R | R' |
|---|---|---|
| 3 | $-(CH_2)_2SO_3$ | Cl |
| 4 | $-(CH_2)_2SO_3^{\ominus}$ | $CH_3$ |
| 10 (Comparison) | $-(CH_2)_2CHSO_3^{\ominus}$<br>$CH_3$ | $CH_3$ |

Example 1: Preparation of Dye 1

Step 1 - Preparation of 7-sulfo-1,1,2-trimethyl-1H-benz[e]indole sodium salt (Intermediate A)

1,1,2-Trimethyl-1H-benz[e]indole (100 g) was added with stirring to 500 ml of concentrated $H_2SO_4$. The mixture was heated at 180 °C for 1/2 hour, cooled to 6-° C, and poured onto 2 kg ice. 500 ml of 50% aqueous NaOH was added slowly. After 24 hours at room temperature, the solid precipitate that had formed was filtered off and the filtrate was mixed with 500 ml saturated aqueous $Na_2SO_4$. The resulting precipitate was collected, added to the previously filtered solid precipitate, and recrystallized from 2 l of $H_2O$. This recrystallized material (25 g) was dried overnight under vacuum at 50° C. Purity was determined by nuclear magnetic resonance. This material was converted to the sodium salt by dissolving it in water, adding 1 equivalent of sodium bicarbonate, and evaporating the water.

Step 2 - Preparation of anhydro-7-sulfo-3-(2-sulfoethyl)-1,1,2-trimethyl-1H-benz[e]indolinium hydroxide sodium salt (Intermediate B)

A mixture of 9.3 g intermediate A and 5.3 g 2-chloroethanesulfonyl chloride in 100 ml of acetic acid were refluxed for 2 hours. After cooling to room temperature, the solvent was removed under vacuum and 100 ml of ethanol was added. The solid was collected and dried to yield a compound that was confirmed to be intermediate B by NMR spectrum.

Step 4 - Preparation of anhydro-3,3′-di-(2-sulfoethyl)-7,7′-disulfo-1,1,1′,1′-tetramethylbenz[e]-indolotricarbocyanine hydroxide trisodium salt (dye 1 of Table I)

2.0 g of intermediate B and 0.6 g glutacondialdehyde dianil hydrochloride were combined in 15 ml of acetic anhydride with 3 ml of triethylamine. The mixture was heated at reflux for 4 minutes. The solid formed was collected and washed with acetic anhydride, and then dissolved in a 50/50 mixture of methanol and water with heating. The solution was filtered and excess sodium acetate was added to the filtrate. After cooling, the solid was filtered out of the solution, washed with methanol, and dried. This material was dye 1 of Table I, λ-max = 784 nm in methanol, ε-max = $22.34 \times 10^4$.

Example 2 - Preparation of anhydro-13-(4-ethoxycarbonyl-l-piperazinyl)-12,14-ethylene-3,3′-di-(2-sulfoethyl)-7,7′-disulfo-1,1,1′,1′-tetramethylbenz[e]indolotricarbocyanine hydroxide trisodium salt (dye 2 of Table II)

2.1 g of intermediate B from Example 1 and 1.3 g 1-[2,5-bis(anilinomethylene)cyclopentylidene]-4-ethoxycarbonylpiperazinium tetrafluoroborate were combined in 10 ml N-methylpyrrolidinone and 4 ml triethylamine and heated at 200 °C for 15 minutes. After cooling to room temperature ether was added with stirring. The ether phase was then decanted and the product was dissolved in methanol and heated to reflux. Excess sodium acetate was added and the mixture was cooled to room temperature. The solid was collected and recrystallized from a 50/50 mixture of methanol and water to yield dye 2 of Table II, λ-max = 726 nm in methanol, ε-max = 13.01 × $10^4$.

Example 3

This example illustrates the desirable absorption but severe post processing stain problem of comparison dyes having structures similar to the dyes useful in the invention (comparison dyes 6-9), the undesirable absorption of dyes 5 and 10, and the desired absorption and low residual stain of dyes 1-4 used according to the invention.

Coating compositions of this example were prepared by adding the components, at predetermined levels based on the coverages desired in coated layers of the composition, to a hydrophilic material such as gelatin. In these examples the compositions were coated on a polyethylene terephthalate support to achieve gelatin coverage of 3.14 $g/m^2$ and component coverage as listed in Table IV. Absorption spectra were obtained using a Diano Match Scan II Spectrophotometer before and after processing.

Processing was by the rack and tank method with development for 30 s at 38 °C in Kodak Rapid Scanner Developer, fixing at 38 °C. in Kodak Rapid Fixer and washing for 60 s at about 32 °C. Total transmittance density measurements were made before and after processing to indicate stain levels before and after processing. A visual evaluation was also made of the post process stain. The results are listed in Table IV. In correlating the visual evaluation of stain with observed spectral curves it should be noted that the eye is sensitive to near 750 nm.

Comparison Dyes 6-9 show strong absorption in the spectral region of interest. However, they also show severe post-processing stain. Comparison dyes 5 and 10 show some absorption in the 800 nm range, but they have an aggregate peak beyond 900 nm, rendering them unsuitable as infrared absorbing antihalation dyes.

In Table IV, coatings 7-10 contain dye compositions useful in the invention. Coatings 1, 2, 3, 4, 5, and 6 contain dyes 5, 6, 7, 8, 9, and 10, respectively, identified in Tables I-III as comparison dyes.

In Table IV, the stain evaluation, done visually, is recorded using the code VS = very severe, S = severe, M = moderate, SL = slight and BD = barely detectable. Other symbols include * which indicates that the dye in this coating had an aggregate peak beyond 900 nm. The optical density (OD) of the aggregate peak is much higher than the maximum in the table. λ-max is the peak with the highest OD in the 300 to 900 nm region λ-sec indicates a secondary maximum or, in most cases, a shoulder (labeled s) or slight curve inflection (labeled i).

TABLE IV

| Coating No. | Dye | Level g/m$^2$ | λ-max | Unprocessed Absorption Data OD | λ-sec | OD | λ-max | Processed OD | λ-sec | OD | Stain |
|---|---|---|---|---|---|---|---|---|---|---|---|
| 1 | 5 | 0.043 | 805* | 0.350 | 750l | 0.210 | 815 | 0.092 | 730l | 0.057 | M |
| 2 | 6 | 0.029 | 732 | 0.495 | 800 | 0.320 | 732 | 0.380 | 800l | 0.252 | VS |
| 3 | 7 | 0.022 | 802 | 0.390 | 740 | 0.270 | 802 | 0.177 | 740l | 0.125 | S |
| 4 | 8 | 0.022 | 800 | 0.350 | 735 | 0.290 | 800 | 0.172 | 740s | 0.140 | S |
| 5 | 9 | 0.064 | 815 | 1.081 | — | — | 816 | 1.117 | — | — | S |
| 6 | 10 | 0.064 | 828* | 0.557 | 765l | 0.280 | 823 | 0.263 | 750s | 0.090 | M |
| 7 | 1 | 0.064 | 797 | 1.218 | 730s | 0.675 | 800 | 0.02 | 730 | 0.010 | BD |
| 8 | 2 | 0.064 | 742 | 0.635 | — | — | 737 | 0.06 | — | — | BD |
| 9 | 3 | 0.064 | 834 | 0.788 | 765s | 0.500 | 836 | 0.105 | 765s | 0.040 | M |
| 10 | 4 | 0.064 | 819 | 0.862 | 752s | 0.439 | 820 | 0.060 | 750s | 0.090 | BD |

## Claims

1. A photographic element comprising a support having thereon a hydrophilic colloid layer comprising infrared-sensitive silver halide and an infrared filter dye, either in the silver halide layer or another

hydrophilic colloid layer, characterized in that the dye has the formula:

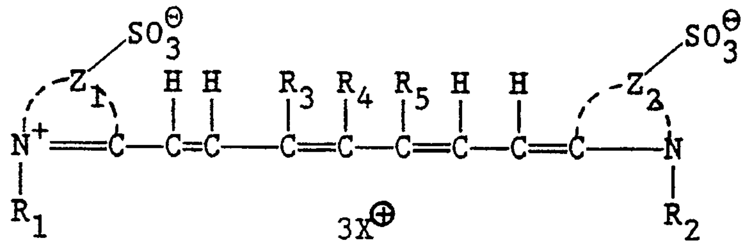

$R_1$ and $R_2$ each independently represents substituted or unsubstituted: sulfoalkyl, carboxyalkyl, or sulfatoalkyl containing from 2 to 4 carbon atoms, having 2 carbon atoms in the alkyl chain linking the nitrogen atom of each Z ring and the sulfo or sulfato group, and 1 carbon atom in the alkyl chain linking the nitrogen atom of each Z ring and the carboxy group,

$R_3$ and $R_5$ are each hydrogen or together represent the atoms necessary to complete a substituted or unsubstituted 5- or 6-membered carbocyclic ring,

$R_4$ represents hydrogen, substituted or unsubstituted alkyl of 1 to 4 carbon atoms, substituted or unsubstituted aryl, cyano, halogen or

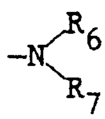 ,

where $R_6$ and $R_7$ each independently represent substituted or unsubstituted alkyl of from 1 to 6 carbon atoms or substituted or unsubstituted aryl or together represent
the non-metallic atoms necessary to form a substituted or unsubstituted 5- or 6-membered heterocyclic ring,

$x^+$ represents a cation, and

$Z_1$ and $Z_2$, each independently represent the atoms needed to complete a substituted or unsubstituted: indole, naphthindole or benzindole nucleus.

2. A photographic element according to Claim 1 wherein the dye is present in an amount of from 9.3 x $10^{-4}$ to 4.7 g/m$^2$.

3. A photographic element according to Claims 1 or 2 wherein the layer comprising the dye is free from any deaggregating compound.

4. A photographic element according to Claims 1-3 wherein the dye has the structure:

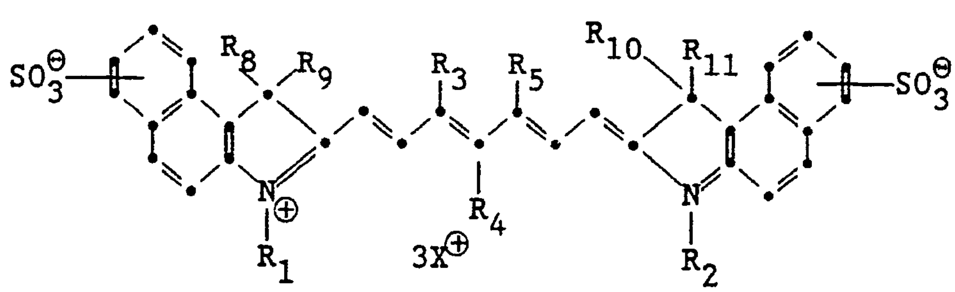

wherein $X^{\oplus}$, $R_1$, $R_2$, $R_3$, $R_4$, and $R_5$, are as defined in Claim 1,

$R_8$, $R_9$, $R_{10}$, and $R_{11}$ each independently represent methyl or ethyl, or

$R_8$ and $R_9$, or $R_{10}$ and $R_{11}$, taken together with the carbon atoms to which they are attached, may form a cycloalkyl group.

**5.** A photographic element according to Claims 1-4 wherein the dye is in the silver halide layer.

**6.** A photographic element according to Claims 1-4 wherein the dye is an antihalation dye present in a layer other than the silver halide layer.

**Revendications**

**1.** Produit photographique comprenant un support portant une couche de colloïde hydrophile comprenant des halogénures d'argent sensibles à l'infra-rouge et un colorant filtrant l'infrarouge, soit dans la couche d'halogénure d'argent soit dans une autre couche de colloïde hydrophile, caractérisé en ce que le colorant correspond à la formule :

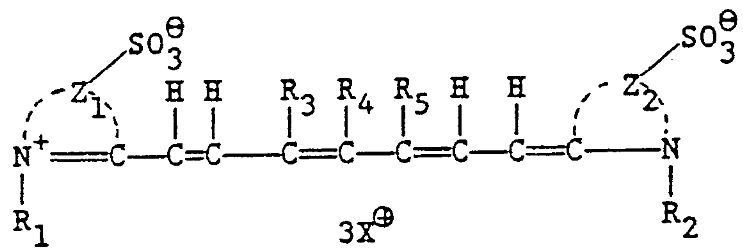

$R_1$ et $R_2$, représentent chacun séparément des groupes substitués ou non sulfoalkyles, carboxyalkyles, ou sulfatoalkyles contenant de 2 à 4 atomes de carbone, ayant 2 atomes de carbone dans la chaîne alkyle liant l'atome d'azote de chaque cycle Z et le groupe sulfo ou sulfato, et 1 atome de carbone dans la chaîne alkyle liant l'atome d'azote de chaque cycle Z et le groupe carboxy,
$R_3$ et $R_5$ sont chacun séparément des atomes d'hydrogène ou, représentent ensemble les atomes nécessaires pour former un composé carbocyclique à 5 à 6 membres substitué ou non,
$R_4$ représente un atome d'hydrogène, un groupe alkyle substitué ou non comprenant 1 à 4 atomes de carbone, un groupe aryle, cyano, un halogène ou

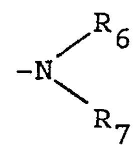 ,

où $R_6$ et $R_7$ représentent, chacun séparément un groupe alkyle substitué ou non comprenant 1 à 6 atomes de carbone ou un groupe aryle substitué ou non, ou représentent ensemble les atomes non-métalliques nécessaires pour former un cycle hétérocyclique, substitué ou non à 5 ou 6 chainons,
x+ représente un cation, et
$Z_1$ et $Z_2$, chacun séparément, représentent les atomes nécessaires pour former des noyaux indole, naphtindole ou benzindole substitués ou non.

**2.** Produit photographique selon la revendication 1, dans lequel la quantité de colorant est comprise entre $9{,}3 \times 10^{-4}$ et $4{,}7$ g/m$^2$.

**3.** Produit photographique selon les revendications 1 ou 2 dans lequel la couche comprenant le colorant ne contient pas de composé provoquant la désagrégation.

**4.** Produit photographique selon les revendications 1 à 3 dans lequel la stucture du colorant est

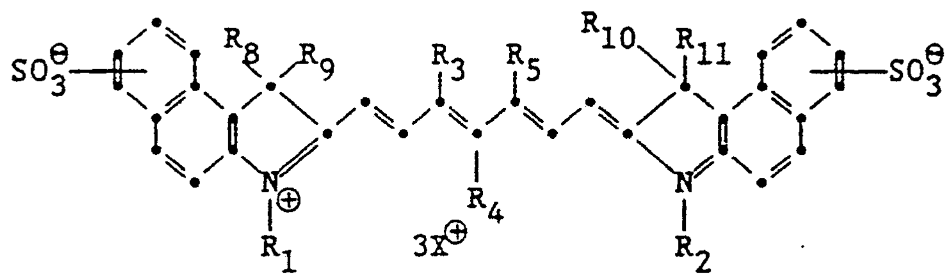

où $X^+$, $R_1$, $R_2$, $R_3$, $R_4$, et $R_5$ sont tels que définis dans la revendication 1,

$R_8$, $R_9$, $R_{10}$, et $R_{11}$, chacun séparément, représentent un groupe méthyle ou éthyle, ou

$R_8$ et $R_9$, ou $R_{10}$ et $R_{11}$, pris ensemble avec les atomes de carbone avec lesquels ils sont liés, peuvent former un groupe cycloalkyle.

5. Produit photographique selon les revendications 1 à 4, dans lequel le colorant est dans la couche aux halogénures d'argent.

6. Produit photographique selon les revendicatione 1 à 4, dans lequel le colorant est un colorant anti-halo présent dans une couche autre que la couche aux halogénures d'argent.

**Patentansprüche**

1. Photographisches Element mit einem Träger, auf dem sich eine hydrophile Kolloidschicht befindet, mit infrarotempfindlichem Silberhalogenid und einem Infrarot-Filterfarbstoff entweder in der Silberhalogenidschicht oder einer anderen hydrophilen Kolloidschicht, dadurch gekennzeichnet, daß der Farbstoff der folgenden Formel entspricht:

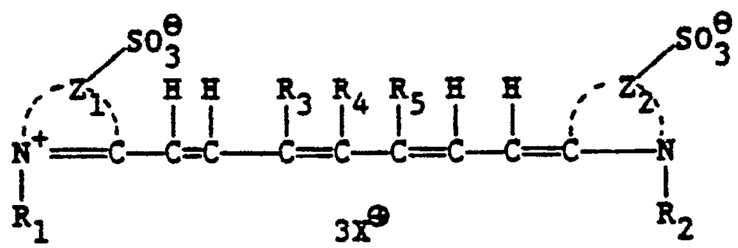

in der bedeuten: $R_1$ und $R_2$ unabhängig voneinander substituiertes oder unsubstituiertes Sulfoalkyl, Carboxylalkyl oder Sulfatoalkyl, das 2 bis 4 Kohlenstoffatome enthält, mit 2 Kohlenstoffatomen in der Alkylkette, die das Stickstoffatom jedes Z-Ringes und die Sulfo- oder Sulfatogruppe verbindet und einem Kohlenstoffatom in der Alkylkette, die das Stickstoffatom jedes Z-Ringes und die Carboxygruppe verbindet,

$R_3$ und $R_5$ jeweils Wasserstoff oder gemeinsam die Atome, die zur Vervollständigung eines substituierten oder unsubstituierten 5- oder 6-gliedrigen carbocyclischen Ringes erforderlich sind,

$R_4$ Wasserstoff, substituiertes oder unsubstituiertes Alkyl mit 1 bis 4 Kohlenstoffatomen, substituiertes oder unsubstituiertes Aryl, Cyano, Halogen oder

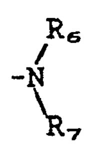

worin $R_6$ und $R_7$ jeweils unabhängig voneinander darstellen: substituiertes oder unsubstituiertes Alkyl mit 1 bis 6 Kohlenstoffatomen oder substituiertes oder unsubstituiertes Aryl oder gemeinsam die nichtmetallischen Atome, die zur Vervollständigung eines substituierten oder unsubstituierten 5- oder 6-gliedrigen heterocyclischen Ringes erforderlich sind,

$X^{\oplus}$ ein Kation und

$Z_1$ und $Z_2$ jeweils unabhängig voneinander die Atome, die zur Vervollständigung eines substituierten oder unsubstituierten Indol-, Naphthindol- oder Benzindolkernes erforderlich sind.

**2.** Photographisches Element nach Anspruch 1, in dem der Farbstoff in einer Menge von 9,3 x $10^{-4}$ bis 4,7 g/$m^2$ vorliegt.

**3.** Photographisches Element nach Ansprüchen 1 oder 2, in dem die Schicht mit dem Farbstoff frei von einer deaggregierenden Verbindung ist.

**4.** Photographisches Element nach Ansprüchen 1-3, in dem der Farbstoff der folgenden Struktur entspricht:

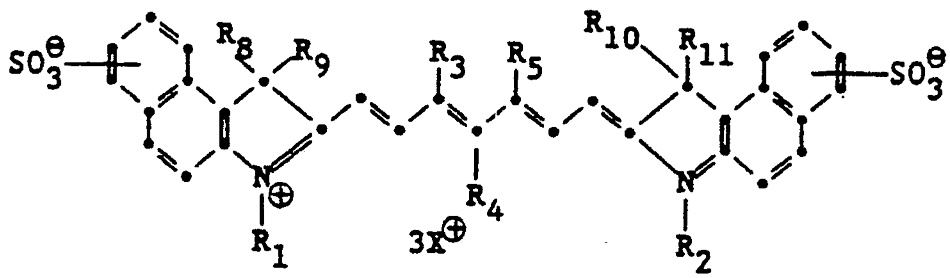

in der $X^{\oplus}$ $R_1$, $R_2$, $R_3$, $R_4$ und $R_5$ die in Anspruch 1 angegebene Bedeutung haben,

$R_8$, $R_9$, $R_{10}$ und $R_{11}$ jeweils unabhängig voneinander Methyl oder Ethyl bedeuten oder

$R_8$ und $R_9$ oder $R_{10}$ und $R_{11}$ gemeinsam mit den Kohlenstoffatomen, an die sie gebunden sind, eine Cycloalkylgruppe darstellen.

**5.** Photographisches Element nach Ansprüchen 1-4, in dem der Farbstoff in der Silberhalogenidschicht vorliegt.

**6.** Photographisches Element nach Ansprüchen 1-4, in dem der Farbstoff ein Lichthofschutzfarbstoff ist, der in einer anderen als der Silberhalogenidschicht vorliegt.